Europäisches Patentamt

European Patent Office

Office européen des brevets

(11) Veröffentlichungsnummer: **0 204 378**

**A1**

## (12) EUROPÄISCHE PATENTANMELDUNG

(21) Anmeldenummer: 86200965.1

(22) Anmeldetag: 03.06.86

(51) Int. Cl.⁴: **G11B 7/26 , G11B 7/24**

(30) Priorität: 05.06.85 DE 3520220

(43) Veröffentlichungstag der Anmeldung:
**10.12.86 Patentblatt 86/50**

(84) Benannte Vertragsstaaten:
**AT BE CH DE FR GB IT LI LU NL SE**

(71) Anmelder: **POLYGRAM GmbH**
**Glockengiesserwall 3**
**D-2000 Hamburg 1(DE)**
Anmelder: **Polygram International Holding B.V.**
**Gerrit van der Veenlaan 4**
**NL-3743 DN Baarn(NL)**

(72) Erfinder: **Koop, Hermann**
**Bachstelzenweg 10**
**D-3003 Ronnenberg(DE)**
Erfinder: **Schüddekopf, Hans**
**Forstgrund 22**
**D-3000 Hannover 61(DE)**

(74) Vertreter: **Kupfermann, Fritz-Joachim et al**
**Philips Patentverwaltung GmbH Billstrasse**
**80 Postfach 10 51 49**
**D-2000 Hamburg 28(DE)**

(54) **Verfahren zur Herstellung einer beschreibbaren optischen Speicherplatte.**

(57) Bei einem Verfahren zur Herstellung einer optischen Speicherplatte (1), die aus wenigstens einer Substrat-Grundplatte (2) und einer auf Abstand zu dieser angeordneten Abschirmplatte (7) besteht, werden beide mittels einer Matrize (10) im Spritzguß- bzw. Spritzpreßverfahren aus Kunststoff hergestellt. Die Platten sind wenigstens im Außenrandbereich über angespritzte Stege (5) durch Verschweißung miteinander verbunden. Die Substrat-Grundplatte (2) weist eine Informationsschicht (4) und in deren Bereich eine Mikrostruktur auf, die von einer Matrize (10) übernommen wird, die wenigstens im Außenbereich mit Vertiefungen (16) zur Bildung der Stege (5) versehen ist. Die Vertiefungen (16) in der Matrize (10) oder in einem für die Herstellung der Matrize verwendeten Negativ-Galvano werden mittels einer energiereichen, auf eine bestimmte Tiefe unterhalb der Oberfläche der Matrize bzw. des Galvanos fokussierten Strahlung durch Aufschmelzen und Verdampfen des Matrizen-bzw. Galvano-materials erzeugt.

F IG.1

## Verfahren zur Herstellung einer beschreibbaren optischen Speicherplatte

Die Erfindung bezieht sich auf ein Verfahren zur Herstellung einer optischen Speicherplatte, die aus wenigstens einer Substrat-Grundplatte und einer auf Abstand zu dieser angeordneten Abschirmplatte besteht, welche beide mittels einer Matrize im Spritzguß-bzw. Spritzpreßverfahren aus Kunststoff hergestellt sind und wenigstens im Außenrandbereich über angespritzte Stege durch Verschweißung miteinander verbunden sind, wobei die Substrat-Grundplatte eine Informationsschicht und in deren Bereich eine Mikrostruktur aufweist, die von einer Matrize übernommen wird, die wenigstens im Außenrandbereich mit Vertiefungen zur Bildung der Stege versehen ist.

Optisch auslesbare, plattenförmige Informationsträger, wie sie als Laser-Bildplatten, digitale Audio-Platten oder Speicherplatten seit längerer Zeit zur Anwendung kommen, ermöglichen eine außerordentlich hohe Speicherdichte der zu speichernden Information und gewinnen deshalb auch mehr und mehr Interesse für das Gebiet der Datentechnik, wo allerdings gefordert wird, daß die zu speichernde digitale Information vom Betreiber einer solchen Einrichtung selbst aufgezeichnet werden kann.

Wie beispielsweise die EP-OS 0 094 273 ausweist, ist es bei solchen optischen Speicherplatten bekannt, von einer bereits im Detail angegebenen Sandwich-Bauform Gebrauch zu machen. Es wird durch die Sandwich-Bauform erreicht, daß die empfindliche Aufzeichnungsschicht einerseits durch die Substrat-Grundplatte hindurch beschrieben werden kann und andererseits die Aufzeichnungsschicht gegen Beschädigungen bei der Handhabung ausreichend geschützt ist. Aufgrund der Funktionsweise der Informationsschicht solcher bekannten Platten ist ein Hohlraum zwischen der Substrat-Grundplatte und der Abschirmplatte erforderlich. Bei der aus der oben genannten EP-OS bekannten Sandwich-Bauform wird dieser Abstand zwischen der Substrat-Grundplatte und der Abschirmplatte mittels angeformter, breiter Stege sichergestellt. Darüber hinaus sind kleinere, dünne Stege vorgesehen, die der Verschweißung dienen. Diese dünnen Stege sind bei dieser bekannten Sandwich-Bauform erforderlich, da es beim Schweißen darauf ankommt, möglichst kleine Berührungsflächen zu haben und so mit möglichst wenig Energie auszukommen, da ein Zuführen von zu viel Energie zu Verwindungen der Platten führt.

Für die Herstellung der dünnen Stege der Platte sind in der Preßmatrize Vertiefungen erforderlich. Normalerweise werden galvanisch hergestellte Preßmatrizen verwendet, die meist aus Nickel bestehen. In diese Preßmatrizen müssen zur späteren Erzeugung der Stege in der Platte Vertiefungen eingebracht werden. Es hat sich herausgestellt, daß die bekannten Verfahren zur Herstellung der Vertiefungen Verunreinigungen an der Matrize zur Folge haben. Diese entstehen dadurch, daß bei der Herstellung der Vertiefungen Material abgehoben werden muß, das sich leicht an der Mikrostruktur ablagert. Darüber hinaus besteht bei jeder Handhabung der Matrize die Gefahr einer Beschädigung oder Verunreinigung dieser Mikrostruktur. Für die Herstellung der Vertiefungen in der Matrize ist außerdem wichtig, daß diese genau ausgeformt werden, da die späteren Stege eine möglichst genau definierte und möglichst kleine Berührungsfläche zu der jeweils gegenüberliegenden Platte haben sollen. Außerdem muß darauf geachtet werden, daß bei der Herstellung der Speicherplatte in dieser keine inneren Spannungen entstehen, die eine Verwindung der Platte zur Folge haben können.

Der Erfindung liegt die Aufgabe zugrunde, für die Herstellung beschreibbarer optischer Speicherplatten ein verbessertes Verfahren anzugeben, bei dem auf schnelle und rationelle Weise die Vertiefungen in der Matrize gebildet werden können, ohne diese zu beschädigen oder zu verschmutzen.

Diese Aufgabe wird erfindungsgemäß dadurch gelöst, daß die Vertiefungen in der Matrize oder in einem für die Herstellung der Matrize verwendeten Negativ-Galvano mittels einer energiereichen, auf eine bestimmte Tiefe unterhalb der Oberfläche der Matrize bzw. des Galvanos fokussierten Strahlung durch Aufschmelzen und Verdampfen des Matrizen-bzw. Galvanomaterials erzeugt werden.

Ein wesentlicher Vorteil dieses Verfahrens ist, daß die Vertiefungen berührungslos hergestellt werden, so daß innere Spannungen in der Matrize vermieden werden. Die Form der Vertiefungen ist von drei leicht beeinflußbaren Parametern der energiereichen Strahlung abhängig. Diese drei Parameter sind Intensität der Strahlung, Dauer der Einwirkung der Strahlung und Fokussierungstiefe der Strahlung. Mittels geeigneter Abstimmung dieser drei Parameter kann unter Berücksichtigung weiterer Einflüsse, wie z. B. des Materials, durch Experimentieren eine gewünschte Form der Vertiefungen erzeugt werden. Eine negative Fokussierungstiefe ist dabei nicht grundsätzlich ausgeschlossen.

Bei Platten mit Mittelloch werden im allgemeinen Stege sowohl im Außenrandbereich als auch im Bereich des Mittelloches vorgesehen werden, während bei Platten ohne Mittelloch lediglich Stege im Außenrandbereich erforderlich sind.

Nach einer weiteren Ausgestaltung der Erfindung ist vorgesehen, daß die Vertiefungen bzw. die Stege in ihren Abmessungen so geformt werden, daß sie den gewünschten Abstand zwischen der Substrat-Grundplatte und der Abschirmplatte und für das Verschweißen einen Punkt-oder Linienkontakt mit der jweils anderen Platte sicherstellen.

Ein wesentlicher Vorteil dieser Ausführungsform ist, daß die oben beschriebenen Parameter bei der Herstellung der Vertiefungen so eingestellt werden, daß die späteren Stege sowohl der Abstandshaltung der beiden Platten dienen als auch der Verschweißung. Durch Einsatz der energiereichen Strahlung und Modulation derselben ist eine diskontinuier liche Form der Vertiefungen bzw. Stege möglich. Die diskontinuierlichen Stege können dabei so geformt und angeordnet sein, daß nach der Verschweißung zwischen den beiden Platten ein hermetisch abgeschlossener Hohlraum entsteht.

Vorteilhafterweise kann die energiereiche Strahlung nach einer weiteren Ausgestaltung der Erfindung von einem Laser erzeugt werden.

Nach einer. weiteren Ausgestaltung der Erfindung ist vorgesehen, daß bei der Herstellung der Vertiefungen die Matrize bzw. das Galvano stationär angeordnet ist und der Laserstrahl mittels eines steuerbaren optischen Systems in einer Kreisbahn über die Matrize bzw. das Galvano geführt wird.

Die Matrize bzw. das Galvano müssen in einer Vorrichtung gehalten werden. Eine präzige Bewegung bzw. Drehung dieser Vorrichtung ist nach dem Verfahren nicht notwendig. Dies vereinfacht den Aufbau der Vorrichtung und beschleunigt die Herstellung der Vertiefungen in der Matrize bzw. in dem Galvano, da das steuerbare optische System den Laserstrahl nahezu trägheitslos auf die jeweils gewünschte Position führen kann.

Die Erfindung wird anhand der Zeichnung näher erläutert. Es zeigen:

Fig. 1 eine beschreibbare optische Speicherplatte im Schnitt,

Fig. 2 eine Aufsicht auf die Speicherplatte nach Fig. 1,

Fig. 3 eine erste Anordnung für das Herstellen rillenförmiger Vertiefungen in Preßmatrizen bzw. Galvanos,

Fig. 4 einen Teilausschnitt einer rillenförmigen Vertiefung in einer Preßmatrize bzw. einem Galvano,

Fig. 5, 6, 7 eine schematische Darstellung der Herstellung der Stege an eine Kunststoffplatte,

Fig. 8 einen mit einer Platte verschweißten Steg nach Fig. 7,

Fig. 9 eine zweite Anordnung zum Herstellen rillenförmiger Vertiefungen in einer Preßmatrize oder einem Galvano.

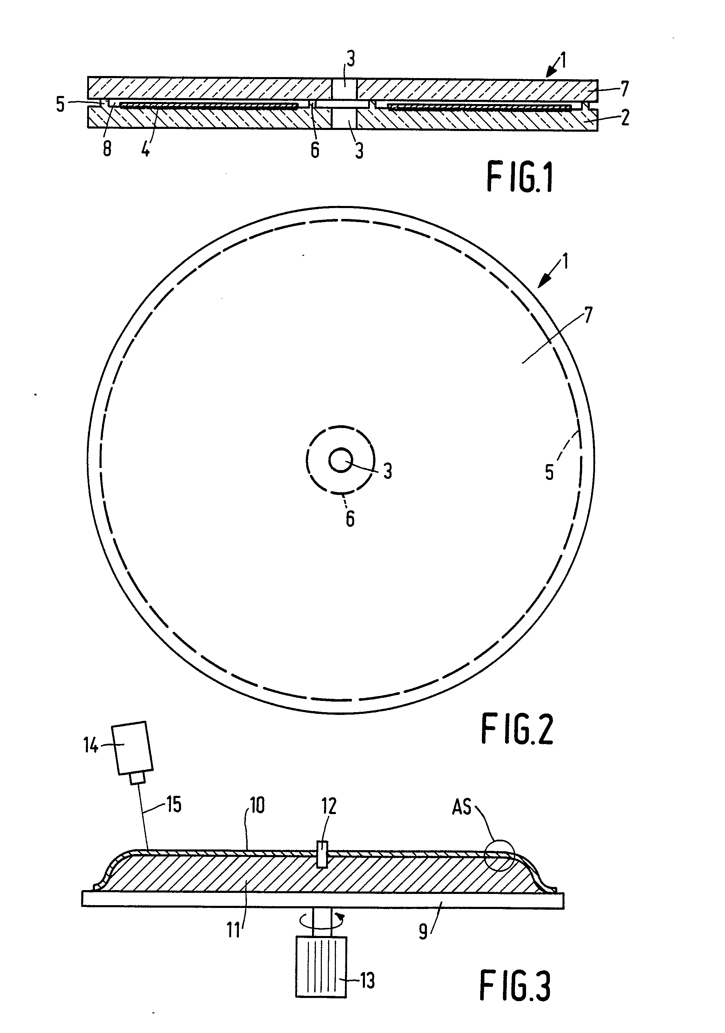

Die Schnittdarstellung der beschreibbaren optischen Speicherplatte 1 nach Fig. 1 zeigt eine Substrat-Grundplatte 2 mit einem Mittelloch 3, die an der Oberseite eine zentrisch zum Mittelloch 3 angeordnete kreisringförmige Aufzeichnungsschicht 4 aufweist. Außerhalb der Aufzeichnungsschicht 4 ist die Substrat-Grundplatte 2 im Außenrandbereich und im Innen-Mittellochbereich jeweils mit einem kreisringförmigen Steg 5 und 6 versehen, deren Höhe die Stärke der Aufzeichnungsschicht 4 wesentlich übersteigt. Im Bereich der Stege 5 und 6 ist die Substrat-Grundplatte 2 mit einer ihre Oberseite abdeckenden Abschirmplatte 7 verschweißt, die entsprechend der Substrat-Grundplatte 2 ebenfalls ein Mittelloch 3 aufweist. Die Substrat-Grundplatte 2 und die Abschirmplatte 7 bestehen aus einem Kunststoff, beispielsweise Polykarbonat, wobie wenigstens der Kunststoff der Substrat-Grundplatte 2 transparent ausgeführt ist.

Wie ferner die Aufsicht auf die beschreibbare optische Speicherplatte 1 nach Fig. 2 verdeutlicht, müssen die ringförmigen Stege 5 und 6 keineswegs einen in sich geschlossenen Stegring darstellen, sondern können sich auch jeweils aus einer kleineren oder größeren Anzahl auf gegenseitigen Abstand gehaltener Stegabschnitte zusammensetzen. Dabei ist gegebenenfalls darauf zu achten, daß nach dem Verschweißen zwischen den Platten ein hermetisch abgeschlossener Hohlraum entsteht.

Grundsätzlich besteht auch die Möglichkeit, die Stege 5 und 6 anstelle der Substrat-Grundplatte 2 der Abschirmplatte 7 fest zuzuordnen. Auch ist es möglich, sowohl die Substrat-Grundplatte 2 als auch die Abschirmplatte 7 jeweils mit zueinander zentrischen Ringstegen 5 und 6 auszubilden. Bei einer zweiseitig verwendbaren Platte können die beiden gegeneinander geschweißten Platten identisch ausgebildet sein und infolgedessen unter Verwendung nur einer Matrize hergestellt werden. Die Stege sind dabei evtl. so angeordnet, daß die Stege der beiden Platten ineinander passen.

Der Schweißvorgang, der beispielsweise mittels Ultraschall vorgenommen wird, ist bei all diesen Ausführungsformen der gleiche. Um hierbei mit möglichst wenig Energie aus zukommen, um die Gefahr eines Verwindens der Speicherplatte zu unterbinden, weisen die Stege 5 und 6 zweckmäßig nur eine Breite in der Größenordnung von 1 mm auf. Die Höhe kann hierbei auf einen Bruchteil von 1 mm beschränkt werden. Es muß nur gewährleistet sein, daß der kreisringförmige Hohlraum 8 im Bereich der Aufzeichnungsschicht 4 in seiner Höhe die Stärke der Aufzeichnungsschicht 4 in ausreichendem Maße übersteigt, damit unter Betriebsbedingungen gewährleistet ist, daß die Platten einander im Aufzeichnungsschicht-Bereich nicht berühren.

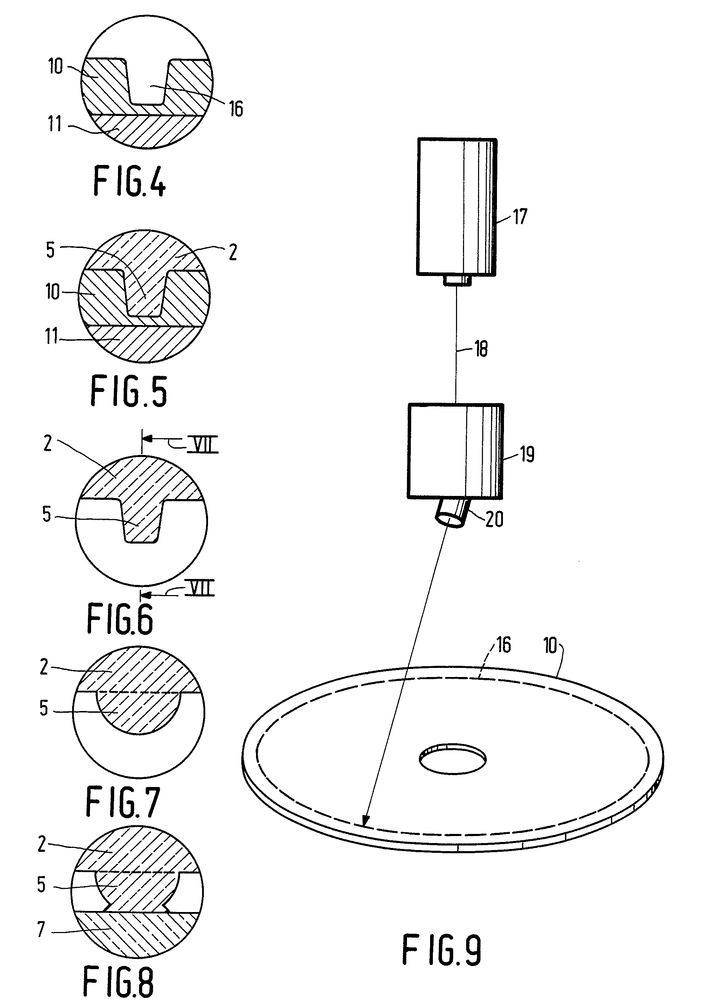

Wie bereits erwähnt worden ist, ist im Bereich der Aufzeichnungsschicht 4 eine Mikrostruktur vorzusehen, die die Form einer Schreibstrahl-Führungsspur haben kann. Zur Herstellung dieser Schreibstrahl-Führungsspur ist es zweckmäßig, die Substrat-Grundplatte 2 im Spritzpreßverfahren unter Verwendung auf galvanischem Wege von einem Master abgeleiteten Matrizen herzustellen. Um mittels einer solchen Matrize gleichzeitig die Stege 5 und 6 an der Platte zu erhalten, kann entsprechend der schematischen Darstellung in Fig. 3 vorgegangen werden.

Fig. 3 zeigt einen Drehteller 9 mit einem eine Matrize 10 tragenden Formteil 11, in deren Zapfen 12 die Matrize 10 mit ihrem Mittelloch zentriert ist. Der Drehteller 9 wird von einem Motor 13 in eine Drehbewegung versetzt, und während der Drehung werden in die Matrize 10 mittels eines Lasers 14, dessen Lichtstrahl 15 auf die Oberfläche der Matrize 10 fokussiert ist, die den Stegen 5 und 6 nach Fig. 1 entsprechenden rillenförmigen Vertiefungen durch Aufschmelzen und Verdampfen des Matrizenmaterials erzeugt. Dabei kann die Oberseite der Matrize in in der Figur nicht dargestellter Weise mittels einer Schablone abgedeckt werden.

Im vergrößerten Ausschnitt AS nach Fig. 4 ist die vom Laser 14 erzeugte rillenförmige Vertiefung 16 erkennbar. Beim Spritzen der Substrat-Grundplatte 2 wird entsprechend der ausschnittsweisen Darstellung nach Fig. 5 infolge der rillenförmigen Vertiefung 16 der gewünschte Steg 5 bzw. 6 geformt und anschließend, wie die Ausschnittzeichnung nach Fig. 6 zeigt, aus der Form gelöst.

In Fig. 7 ist der Steg nach Fig. 6 im Schnitt entlang de Linie VII-VII dargestellt. Dabei ist erkennbar, daß der Steg, in Laufrichtung der Platte gesehen, annähernd halbzylinderförmig ist. Dadurch ist eine Linienberührung zwischen dem Steg und einer Abschirmplatte gewährleistet.

In Fig. 8 ist nochmals der Steg nach Fig. 7 dargestellt, jedoch nunmehr im mit einer Abschirmplatte verschweißten Zustand.

In Fig. 9 ist eine zweite Anordnung zum Herstellen rillenförmiger Vertiefungen in Matrizen bzw. Galvanos dargestellt. Zur Herstellung der Vertiefungen 16 in der Matrize 10 ist diese stationär angeordnet. Ein Laserstrahl 18 eines Lasers 17 wird über eine bewegliche Linse 20 eines steuerbaren optischen Systems 19 auf die Matrize 10 geworfen, wo infolge der Einwirkung des Laserstrahles Vertiefungen 16 durch Aufschmelzen und Verdampfen erzeugt werden.

Üblicherweise wird eine in Fig. 3 bzw. 9 dargestellte Matrize 10 von eine Masterplatte dadurch gewonnen, daß von der Masterplatte zunächst ein Vater-Galvano erstellt wird. Von diesem Vater-Galvano, das ein Negativ des im Master vorliegenden Originals darstellt, wird ein ein Positiv darstellendes Mutter-Galvano gewonnen. Vom Mutter-Galvano schließlich können dann mehrere, wiederum Negative darstellende Preßmatrizen gezogen werden. Dies ergibt die Möglichkeit, die mit dem Laserstrahl herauszuarbeitenden rillenförmigen Vertiefungen bereits beim Vater-Galvano vorzunehmen, weil dann die gewünschten rillenförmigen Vertiefungen bei sämtlichen vom Vater-Galvano über das Mutter-Galvano abgeleiteten Matrizen ebenfalls automatisch vorhanden sind.

Wird aus Gründen der Präzision und der Glattheit der Oberflächen auch bei der Herstellung der Abschirmplatte 7 von einem Spritzguß-bzw. Spritzpreßverfahren Gebrauch gemacht, so können hierfür verwendete Matrizen in entsprechender Weise mit rillenförmigen Vertiefungen für anzuformende Stege 5 und 6 herangezogen werden. Entsprechend einer Matrize kann auch die die Unterseite der Abschirmplatte 7 prägende Formhälfte bzw. Spritzpreßformhälfte mittels eines energiereichen Laserstrahls mit den gewünschten rillenförmigen Vertiefungen versehen werden.

## Ansprüche

1. Verfahren zur Herstellung einer optischen Speicherplatte, die aus wenigstens einer Substrat-Grundplatte und einer auf Abstand zu dieser angeordneten Abschirmplatte besteht, welche beide mittels einer Matrize im Spritzguß-bzw. Spritzpreßverfahren aus Kunststoff hergestellt sind und wenigstens im Außenrandbereich über angespritzte Stege durch Verschweißung miteinander verbunden sind, wobei die Substrat-Grundplatte eine Informationsschicht und in deren Bereich eine Mikrostruktur aufweist, die von einer Matrize übernommen wird, die wenigstens im Außenrandbereich mit Vertiefungen zur Bildung der Stege versehen ist, dadurch gekennzeichnet, daß die Vertiefungen in der Matrize oder in einem für die Herstellung der Matrize verwendeten Negativ-Galvano mittels einer energiereichen, auf eine bestimmte Tiefe unterhalb der Oberfläche der Matrize bzw. des Galvanos fokussierten Strahlung durch Aufschmelzen und Verdampfen des Matrizen-bzw. Galvanomaterials erzeugt werden.

2. Verfahren nach Anspruch 1, dadurch gekennzeichnet, daß die Vertiefungen bzw. die Stege in ihren Abmessungen so geformt werden, daß sie den gewünschten Abstand zwischen der Substrat-Grundplatte und der Abschirmplatte und für das Verschweißen einen Punkt-oder Linienkontakt mit der jeweils anderen Platte sicherstellen.

3. Verfahren nach Anspruch 1 und/oder 2, dadurch gekennzeichnet, daß die energiereiche Strahlung von einem Laser erzeugt wird.

4. Verfahren nach einem oder mehreren der Ansprüche 1 bis 3, dadurch gekennzeichnet, daß bei der Herstellung der Vertiefungen die Matrize bzw. das Galvano stationär angeordnet ist und der Laserstrahl mittels eines steuerbaren optischen Systems in einer Kreisbahn über die Matrize bzw. das Galvano geführt wird.

FIG.1

FIG.2

FIG.3

FIG.4

FIG.5

FIG.6

FIG.7

FIG.8

FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 094 273 (THOMSON-CSF) <br> * Seite 3, Zeile 29 - Seite 7, Zeile 21; Figuren 3-8 * | 1 | G 11 B 7/26 <br> G 11 B 7/24 |
| D,A | | 2 | |
| | --- | | |
| Y | EP-A-0 129 225 (POLYGRAM GmbH) <br> * Seite 4, Zeilen 4-18; Seite 6, Zeilen 7-27; Figuren 4-6 * | 1 | |
| | --- | | |
| Y | DE-A-2 142 445 (ULLSTEIN) <br> * Seite 5, Zeile 21 - Seite 8, Zeile 9 * | 1 | |
| A | | 3 | |
| | --- | | RECHERCHIERTE SACHGEBIETE (Int. Cl.4) |
| A | PATENTS ABSTRACTS OF JAPAN, Band 8, Nr. 48 (P-258)[1485], 3. März 1984, Seite 94 P 258; & JP - A - 199 441 (NIPPON DENKI K.K.) 19.11.1983 <br> * Insgesamt * | 1,3 | G 11 B |
| | --- | | |
| A | PATENTS ABSTRACTS OF JAPAN, Band 7, Nr. 93 (P-192)[1238], 19. April 1983, Seite 102 P 192; & JP - A - 58 19 745 (FUJI SHASHIN FILM K.K.) 04.02.1983 <br> * Insgesamt * | 1,2 | |
| | ---     -/- | | |

Der vorliegende Recherchenbericht wurde für alle Patentansprüche erstellt.

| Recherchenort <br> DEN HAAG | Abschlußdatum der Recherche <br> 20-08-1986 | Prüfer <br> LEHNBERG C.R. |
|---|---|---|

Europäisches
Patentamt

**EUROPÄISCHER RECHERCHENBERICHT**

Nummer der Anmeldung

EP  86 20 0965

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENTS ABSTRACTS OF JAPAN, Band 7, Nr. 87 (P-190)[1232], 12. April 1983, Seite 121 P 190; & JP - A - 58 14 342 (SHARP K.K.) 27.01.1983 * Insgesamt. * | 1,2 | |
| | --- | | |
| A | US-A-4 353 767 (R.L. WILKINSON) * Spalte 2, Zeilen 13-57; Spalte 3, Zeilen 46-59; Spalte 4, Zeilen 22-54; Figuren 1-3 * | 1,2 | |
| | --- | | |
| A | EP-A-0 070 514 (TOSHIBA K.K.) * Seite 5, Zeile 20 - Seite 8, Zeile 10 * | 1,3 | |
| | ----- | | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 20-08-1986 | LEHNBERG C.R. |